(19) Europäisches Patentamt
European Patent Office
Office européen des brevets

(11) Veröffentlichungsnummer : **0 125 404**
**B1**

# (12) EUROPÄISCHE PATENTSCHRIFT

(45) Veröffentlichungstag der Patentschrift :
21.01.87

(51) Int. Cl.⁴ : **B 60 Q 11/00, H 05 B 37/03**

(21) Anmeldenummer : **84102097.7**

(22) Anmeldetag : **29.02.84**

(54) **Schaltung zur Fehlermeldung bei einem über eine steuerbare Schalteinrichtung geschalteten Stromverbraucher.**

(30) Priorität : **15.04.83 DE 3313712**

(43) Veröffentlichungstag der Anmeldung :
**21.11.84 Patentblatt 84/47**

(45) Bekanntmachung des Hinweises auf die Patenterteilung : **21.01.87 Patentblatt 87/04**

(84) Benannte Vertragsstaaten :
**AT BE CH DE FR GB IT LI LU NL SE**

(56) Entgegenhaltungen :
**EP-A- 0 051 299**
**EP-A- 0 051 854**
**DE-A- 2 940 283**
**DE-B- 1 933 016**

(73) Patentinhaber : **AEG KABEL Aktiengesellschaft**
**Bonnenbroicher Strasse 2-14**
**D-4050 Mönchengladbach 2 (DE)**

(72) Erfinder : **Domorazek, Gottfried, Dr.**
**Rodenbusch 35**
**D-4030 Ratingen 5 (DE)**

(74) Vertreter : **Langer, Karl-Heinz, Dipl.-Ing.**
**AEG Theodor-Stern-Kai 1**
**D-6000 Frankfurt/Main 70 (DE)**

**Beschreibung**

Die Erfindung betrifft eine Schaltung zur Fehlermeldung bei einem über eine steuerbare Schalteinrichtung geschalteten Stromverbraucher, dessen über die Steuerleitung meßbarer Eingangswiderstand durch eine von einem Fehlersignal gesteuerte Impedanz veränderbar ist, der eine Anzeigeeinrichtung zugeordnet ist, welche eine Fehleranzeige abgibt, wenn der Widerstand der Steuerleitung von dem Wert abweicht, welcher bei nicht vorhandenem Fehler meßbar ist, und die einen Fehlerdetektor aufweist, welcher bei Abweichung des Dauerstroms vom vorgegebenen Wert ein Fehlersignal erzeugt, welches die steuerbare Impedanz verändert. Diese Schaltung ist durch DE-A-3 042 415 bekannt.

Aus der EP-A1-00 51 299 ist eine Schaltung zur Fehlermeldung bekannt, welche Unterbrechungen im Stromkreis eines Verbrauchers feststellbar macht. Dazu ist eine Auswert- und Anzeigestufe vorgesehen, die den Fehler selbsttätig und unabhängig vom augenblicklichen Betriebszustand anzeigt. Im nichteingeschalteten Zustand wird der Anschluß des Verbrauchers an die Prüfschaltung durch einen Umschaltkontakt hergestellt und der Durchgangswiderstand mittels eines Hilfsstromes gemessen.

In der DE-A-19 33 016 wird eine durch Transistoren realisierte Schaltlogik beschrieben, die sowohl im Betriebs- als auch im Ruhezustand nur anspricht, wenn ein Schaden an den zu überwachenden Verbrauchern vorliegt. Auch bei dieser Lösung überwacht sich die Logik nicht selbst.

Mit den bekannten Schaltungen ist es möglich, Fehler des Stromverbrauchers oder der Schalteinrichtung bei ein- oder ausgeschaltetem Stromverbraucher festzustellen und zu melden.

Der vorliegenden Erfindung liegt die Aufgabe zugrunde, die eingangs genannte Schaltung derart zu gestalten, daß eine Fehlerermittlung auf einfache Weise möglich ist und die Schaltung sich selbst überwacht, d. h. ihre Funktionsfähigkeit durch ein Signal anzeigt.

Die Lösung gelingt durch die im Anspruch 1 gekennzeichneten Merkmale. Vorteilhafte Weiterbildung der Erfindung sind in den Unteransprüchen gekennzeichnet.

Durch die Erfindung ist es möglich, zu beliebigen Zeitpunkten und auch permanent eine Kontrolle der Funktionsfähigkeit durchzuführen, ohne daß zusätzlich Leitungen vom Stromverbraucher zu einer Bedienungszentrale geführt werden müssen. Die vorhandenen Steuerleitungen, welche zur steuerbaren Schalteinrichtung führen, werden ebenfalls zur Übertragung von Fehlersignalen auch für den Fall ausgenutzt, daß der Verbraucher ausgeschaltet und die steuerbare Schalteinrichtung und die Steuerleitung keinen Betriebsstrom leiten.

Am Orte des Verbrauchers erfolgt die Fehlererfassung mittels eines niedrigen, durch den Verbraucher geleiteten Dauerstroms. Die Spannung am Verbraucher ist dann ein Maß dafür, ob ein Kurzschluß oder eine Unterbrechung vorliegt und kann von einem Fehlerdetektor ausgewertet werden. Das Fehlersignal wird der in der Bedienungszentrale befindlichen Anzeigevorrichtung nicht über besondere Leitungen übermittelt, sondern dieses Fehlersignal verändert über eine steuerbare Impedanz den Eingangswiderstand der Steuerleitungen der steuerbaren Schalteinrichtung, so daß in der Zentrale durch Widerstandsmessung bzw. indirekt durch Strom- oder Spannungsmessung der Fehlerzustand ermittelt und angezeigt werden kann. Diese Messung erfolgt vorteilhaft mit Hilfe von in die Steuerleitungen geleiteter Spannungsimpulse, welche aber nicht die Einschaltung der Stromverbraucher verursachen, sondern lediglich eine Widerstandsmessung ermöglichen sollen. Bei Abweichung des über die Steuerleitung gemessenen Widerstandes wird ein Fehler festgestellt und gemeldet. Um den Ruhestromverbrauch zu senken, kann der über den Widerstand und die Verbraucher und fließende Strom über einen Halbleiterschalter abgeschaltet werden. Dieser wird aufgesteuert, sobald an der Steuerleitung ein Spannungsimpuls anliegt.

Wenn mehrere Stromverbraucher überwacht werden müssen, wie insbesondere bei einem Kraftfahrzeug, werden die Spannungsimpulse vorteilhaft von einem einzigen Impulsgenerator über Dioden parallel in sämtliche Steuerleitungen geleitet. Wenn auf eine Anzeige des Fehlerortes verzichtet werden kann, können die Widerstände aller Steuerleitungen vorteilhaft über Dioden von einer gemeinsamen Anzeigevorrichtung erfaßt werden.

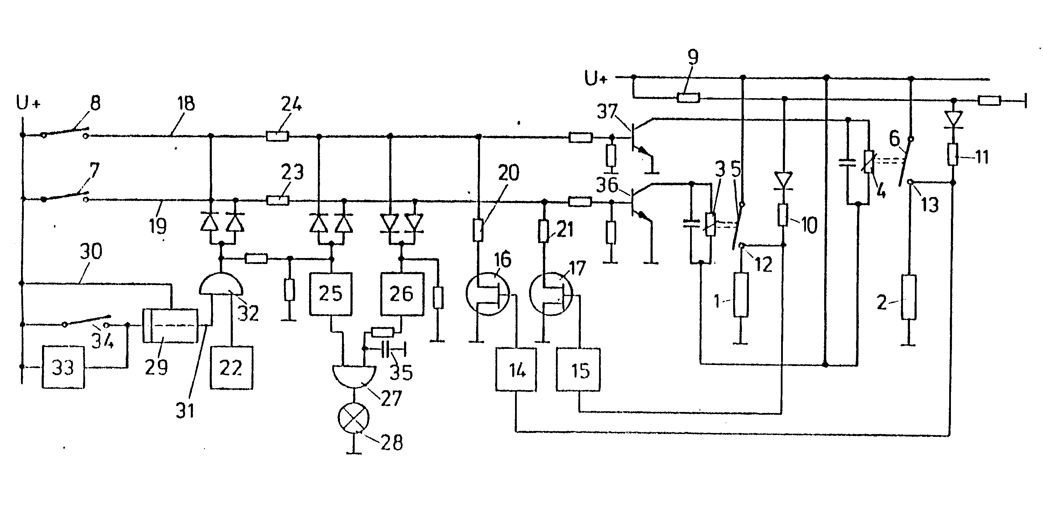

Die Erfindung wird anhand eines in der Zeichnung dargestellten vorteilhaften Schaltungsbeispiels erläutert.

Die Figur zeigt eine vereinfacht dargestellte erfindungsgemäße Schaltung für die Fehlererfassung im Falle zweier Stromverbraucher.

Die Stromverbraucher 1 und 2 sind durch die von den Relais 3 und 4 betätigbaren Schalter 5 und 6 an den Pluspol+ der Spannung U anschließbar, indem den Wicklungen der Relais 3 und 4 durch Schließen der Steuerschalter 7 und 8 über die Transistoren 36 und 37 Steuerstrom zugeführt wird.

Über den gemeinsamen hochohmigen Widerstand 9 sowie die Widerstände 10 und 11 wird den Stromverbrauchern 1 und 2 unter Umgehung der Schalter 5 und 6 ein sehr niedriger Dauerstrom zugeführt. Das Potential an den Punkten 12 und 13 weicht bei Kurzschluß oder Unterbrechung der Stromverbraucher 1 und 2 von einem Normalwert ab. Im Falle einer solchen Abweichung werden die Transistoren 16 und 17 von den Fehlerdetektoren 14 und 15 gesperrt, so daß der hinter den Widerständen 23 und 24 meßbare Widerstand der Steuerleitung 18 oder 19 vergrößert wird, weil die Widerstände 20 oder 21 nicht mehr erfaßt werden.

Im Beispiel wird diese Widerstandsänderung dadurch gemessen, daß durch einen Impulsgenerator 22 Spannungsimpulse auf die Steuerleitungen 18 und 19 geleitet werden, durch welche vom Widerstand der Steuerleitungen abhängige Stromimpulse verursacht werden, welche wiederum an den Widerständen 23 und 24 Spannungsfälle verursachen, die davon abhängig sind, ob die Transistoren 16 und 17 gesperrt oder leitend oder ob die Steuerleitungen selbst fehlerhaft kurzgeschlossen oder unterbrochen sind. Hinter den Widerständen 23 und 24 wird die an den Steuerleitungen 18 und 19 anliegende Spannung von einem Fensterdiskriminator 26 erfaßt, welcher im Fehlerfall über die Oder-Schaltung 27 ein Aufleuchten der Anzeigelampe 28 bewirkt. Der Fensterdiskriminator 26 wird wirksam, wenn die Spannung an den Steuerleitungen höher als normal ist, also beim Sperren der Transistoren 16 und 17 im Fall eines Kurzschlusses oder einer Unterbrechung der Stromverbraucher 1 oder 2 sowie bei Unterbrechung der Steuerleitungen 18 oder 19. Da der Fensterdiskriminator 26 nur bei eingeschalteten und fehlerhaften Verbraucher ein kontinuierliches Fehlersignal abgibt, bei ausgeschalteten und fehlerhaften Verbraucher nur zu der Zeit, wenn gerade ein Testimpuls anliegt, soll im letzteren Fall das Fehlersignal abgespeichert werden, um ein Flackern der Fehleranzeigelampe zu vermeiden. Ein solcher Speicher ist durch den Kondensator 35 angedeutet. Selbstverständlich kann dieser auch durch andere Bauelemente wie z. B. durch ein nachtriggerbares Monoflop ersetzt werden.

Das nachtriggerbare Monoflop 25 bewirkt ein Aufleuchten der Anzeigelampe 28 im Falle eines Kurzschlusses in den Steuerleitungen 18 oder 19, wenn nämlich die an den Steuerleitungen anliegende Spannung niedriger als der Normalwert ist, da in diesem Fall auch die Spannungsimpulse am Eingang des Monoflops 25 kurzgeschlossen werden, wodurch das Monoflop nicht gesetzt und nachgetriggert wird. Sein Ausgang führt Signal.

Im Beispiel sind die Potentiale beider Steuerschaltungen 18 und 19 über Entkopplungsdioden einem gemeinsamen Fensterdiskriminator zugeführt und wirken auf eine gemeinsame Anzeigelampe. Selbstverständlich könnte jeder Steuerleitung ein eigenes Fehlererfassungssystem zugeordnet sein, wenn eine separate Ortung der Fehler möglich sein soll.

Wenn die Flip-Flop-Schaltung 29 über die Leitung 30 an Spannung gelegt wird, beispielsweise durch Anlegen der Spannung U+ beim Inbetriebsetzen der Anlage, im Falle eines Kraftfahrzeugs durch Betätigung des Zündschlüssels, dann liegt zunächst am Ausgang 31 eine niedrige Spannung, welche über die Und-Schaltung eine Weiterleitung der Spannungsimpulse des Impulsgenerators 22 auf die Steuerleitungen 18 und 19 verhindert. Dem nachtriggerbaren Monoflop 25 wird keine Spannung von den Steuerleitungen zugeführt, als ob ein fehlerhafter Kurzschluß vorläge. Es bleibt somit rückgesetzt und sein Ausgang führt Signal. Somit leuchtet die Anzeigelampe auf. Dieses Aufleuchten bei Inbetriebnahme der Anlage zeigt an, daß die Fehleranzeigeelemente funktionsfähig sind.

Nach Schließen des Verzögerungsschalters 33 erzeugt die Flip-Flop-Schaltung 29 auf der Leitung 31 eine hohe Spannung, so daß die Spannungsimpulse des Impulsgenerators 22 von der Und-Schaltung 32 weitergeleitet werden. Die Anzeigelampe 28 erlischt, sofern kein Fehler vorliegt, da die ankommenden Spannungsimpulse das Monoflop laufend triggern, was bewirkt, daß sein Ausgang kein Signal führt. Ein Ausfall des Impulsgenerators 22 würde sofort angezeigt werden, da in diesem Fall das Monoflop 25 rückgesetzt bliebe. Das Erlöschen der Funktionsanzeige der nach dem Einschalten aufleuchtenden Anzeigelampe kann bei fehlerfreiem System auch durch den Schalter 34 bewirkt werden. Wenn dieser Schalter 34 ein Bremslichtschalter eines Kraftfahrzeugs ist, kann auf diese Art dessen Funktionsfähigkeit kontrolliert werden. Beim kurzen Betätigen des Bremspedals nach dem Einschalten der Zündung muß nämlich die Anzeigelampe 28 erlöschen.

Damit die Spannungsimpulse des Impulsgenerators 22 nicht das Ansprechen der Relais 3 oder 4 verursachen, sind diesen Relais Kondensatoren parallel geschaltet, wodurch angedeutet wird, daß eine Einschaltverzögerung bzw. Tiefpaßwirkung vorzusehen ist.

Bei Einschaltung der Schalter 7 und 8 liegt auf der betreffenden Steuerleitung ein Dauerimpuls, so daß auch in diesem Fall die Fehleranzeige wie beschrieben wirksam ist. Die Fehlerdetektoren 14 und 15 können in dem Fachmann geläufiger Weise derart gestaltet sein, daß sie das Potential an den Punkten 12 und 13 unterschiedlich bewerten, je nachdem, ob die Schalter 7 und 8 ein- oder ausgeschaltet sind.

**Patentansprüche**

1. Schaltung zur Fehlermeldung bei einem über eine steuerbare Schalteinrichtung (3, 4) geschalteten Stromverbraucher (1, 2), deren über die Steuerleitung (18, 19) meßbarer Eingangswiderstand durch eine von einem Fehlersignal gesteuerte Impedanz (16, 17) veränderbar ist, der eine Anzeigeeinrichtung (28) zugeordnet ist, welche eine Fehleranzeige abgibt, wenn der Widerstand der Steuerleitung von dem Wert abweicht, welcher bei nicht vorhandenem Fehler meßbar ist, und die einen Fehlerdetektor (14, 15) aufweist, welcher bei Abweichung des Dauerstroms vom vorgegebenen Wert ein Fehlersignal erzeugt, welches die steuerbare Impedanz verändert, dadurch gekennzeichnet, daß dem Verbraucher (1, 2) über einen Stromkreis unabhängig vom Schaltzustand der Schalteinrichtung (Schalter 5, 6) ein Dauerstrom zugeführt ist, welcher einen Bruchteil des Nennstroms beträgt, und daß ein Impulsgenerator (22) vorgesehen ist, der der Steuerleitung (18, 19) statt der nicht aufgeschalteten Steuersignale einen Spannungsimpuls zuführt.

2. Schaltung nach Anspruch 1, dadurch gekennzeichnet, daß dem Steuereingang der steuerbaren Schalteinrichtung (3, 4) ein Tiefpaßfilter zugeordnet ist.

3. Schaltung nach Anspruch 1 oder 2, dadurch gekennzeichnet, daß der Impulsgenerator (22) über eine Verzögerungseinrichtung (33) einschaltbar ist.

4. Schaltung nach Anspruch 3, dadurch gekennzeichnet, daß die Verzögerungseinrichtung (33) bei Anwendung für ein Kraftfahrzeug durch den Bremslichtschalter (34) überbrückbar ist.

5. Schaltung nach einem der Ansprüche 1 bis 4, dadurch gekennzeichnet, daß dem Anzeigeeinrichtung (28) ein Monoflop (25) und ein Fensterdiskriminator (26) vorgeschaltet sind, welche über gegensinnig gepolte Dioden an die Steuerleitung (18, 19) angeschlossen sind.

6. Schaltung nach Anspruch 3, dadurch gekennzeichnet, daß während der Verzögerungszeit der Verzögerungseinrichtung (33) die Anzeigevorrichtung (28) betätigt ist.

7. Schaltung nach einem der Ansprüche 1 bis 6, dadurch gekennzeichnet, daß im Falle mehrerer über eine steuerbare Schalteinrichtung (3, 4) zu schaltender Stromverbraucher (1, 2) sämtliche Steuerleitungen (18, 19) an einen einzigen Impulsgenerator (22) angeschlossen sind.

8. Schaltung nach Anspruch 7, dadurch gekennzeichnet, daß mindestens zwei Steuerleitungen (18, 19) über Dioden auf eine gemeinsame Anzeigevorrichtung (28) wirken.

9. Schaltung nach einem der Ansprüche 1 bis 7, dadurch gekennzeichnet, daß nach Ausfall des Impulsgenerators (22) die Anzeigevorrichtung (28) betätigt ist.

## Claims

1. A circuit for monitoring a fault in a load (1, 2) which is switched by a controlled switch (3, 4), wherein the input resistance, which can be measured through the control line (18, 19), can be varied by an impedance (16, 17) which is controlled by a fault signal and with which there is associated a display device (28) which indicates a fault if the resistance of the control line deviates from the value which can be measured when there is no fault present, and which comprises a fault detector (14, 15) which, on a deviation of the permanent current from the preset value, generates a fault signal which alters the controllable impedance, characterised in that a permanent current, which amounts to a fraction of the rated current, is supplied to the load (1, 2) through a circuit regardless of the switching state of the switching device (switches 5, 6) and that a pulse generator (22) is provided which supplies a voltage pulse to the control line (18, 19) instead of the control signals which are not being applied.

2. A circuit as claimed in Claim 1, characterised in that a low-pass filter is associated with the control input of the controllable switching device (3, 4).

3. A circuit as claimed in Claim 1 or 2, characterised in that the pulse generator (22) can be switched through a delay device (33).

4. A circuit as claimed in Claim 3, characterised in that, when used for a motor vehicle, the delay device (33) can be bridged by the brakelight switch (34).

5. A circuit as claimed in one of the Claims 1 to 4, characterised in that the delay device (28) is preceded by a monostable multivibrator (25) and a window discriminator (26) which are connected to the control line (18, 19) through oppositely poled diodes.

6. A circuit as claimed in Claim 3, characterised in that the display device (28) is actuated during the delaying time of the delay device (33).

7. A circuit as claimed in one of the Claims 1 to 6, characterised in that in the case of a plurality of loads (1, 2) to be switched through a controllable switching device (3, 4), all the control lines (18, 19) are connected to a single pulse generator (22).

8. A circuit as claimed in Claim 7, characterised in that at least two control lines (18, 19) act, through diodes, on a common display device (28).

9. A circuit as claimed in one of the Claims 1 to 7, characterised in that the display device (28) is actuated after failure of the pulse generator (22).

## Revendications

1. Montage pour signaler un défaut d'un dispositif consommateur de courant (1, 2) qui est connecté et déconnecté au moyen d'un dispositif de connexion (3, 4) commandé, la résistance d'entrée du consommateur, mesurable à travers la ligne de commande (18, 19), étant modifiable par une impédance (16, 18) commandée par un signal de défaut, montage auquel est coordonné un dispositif d'indication (28) qui délivre une indication de défaut lorsque la résistance de la ligne de commande s'écarte de la valeur mesurable en cas d'absence de défaut, et qui comprend un détecteur de défaut (14, 15) qui, lorsque le courant permanent s'écarte de la valeur préfixée, produit un signal de défaut qui modifie l'impédance commandée, caractérisé en ce qu'il comprend un circuit pour amener au consommateur (1, 2), quel que soit l'état de couplage du dispositif de connexion (interrupteurs 5, 6), un courant permanent qui correspond à une fraction du courant nominal, ainsi qu'un générateur d'impulsions (22) qui, à la place des signaux de commande non appliqués, envoie une impulsion de tension à la ligne de commande (18, 19).

2. Montage selon la revendication 1, caractérisé en ce qu'un filtre passe-bas est coordonné à l'entrée de commande du dispositif de connexion commandé (3, 4).

3. Montage selon la revendication 1 ou 2, caractérisé en ce que le générateur d'impulsions (22) est mis en marche à travers un dispositif à retard (33).

4. Montage selon la revendication 3, caractérisé en ce que le dispositif à retard (33) peut être shunté par l'interrupteur d'éclairage stop (34) en cas d'application à un véhicule automobile.

5. Montage selon une des revendications 1 à 4, caractérisé en ce que le dispositif d'indication (28) est précédé d'une bascule monostable (25) et d'un discriminateur à fenêtre (26) qui, à travers des diodes polarisées en inverse, sont connectés à la ligne de commande (18, 19).

6. Montage selon la revendication 3, caractérisé en ce que le dispositif d'indication (28) est actionné pendant le retard du dispositif à retard (33).

7. Montage selon une des revendications 1 à 6, caractérisé en ce que, dans le cas de plusieurs consommateurs de courant (1, 2) à connecter et à déconnecter par un dispositif de connexion (3, 4) commandé, toutes les lignes de commande (18, 19) sont reliées à un générateur d'impulsions (22) unique.

8. Montage selon la revendication 7, caractérisé en ce que deux lignes de commande (18, 19) au moins agissent à travers des diodes sur un dispositif d'indication (28) commun.

9. Montage selon une des revendications 1 à 7, caractérisé en ce que le dispositif d'indication (28) est actionné à la suite de la défaillance du générateur d'impulsions (22).